# EUROPÄISCHE PATENTSCHRIFT

(11) **EP 0 824 557 B1**
(45) Veröffentlichungstag und Bekanntmachung des Hinweises auf die Patenterteilung: **19.01.2000**
(21) Anmeldenummer: 96914145.6
(22) Anmeldetag: 29.04.1996
(51) Int. Cl.: C08G 18/10, C08G 18/38, C08G 18/42, C08G 18/66, C08G 18/08, C08L 1/02, C08L 3/02

(54) **BIOLOGISCH ABBAUBARE UND KOMPOSTIERBARE FORMKÖRPER EINSCHLIESSLICH FLÄCHENGEBILDEN**
BIODEGRADABLE AND COMPOSTABLE PLASTIC ARTICLES, INCLUDING FLAT-SHAPED ARTICLES
CORPS MOULES BIODEGRADABLES ET POUVANT SERVIR DE COMPOST Y COMPRIS PRODUITS PLATS

(30) Priorität: 11.05.1995 DE 19517185
(43) Veröffentlichungstag der Anmeldung: 25.02.1998
(73) Patentinhaber: BAYER AG, 51368 Leverkusen (DE)
(72) Erfinder: MÜLLER, Hanns-Peter, D-51519 Odenthal (DE); KALBE, Jochen, D-45219 Essen (DE); KOCH, Rainhard, D-51065 Köln (DE)
(86) Internationale Anmeldenummer: EP9601780
(87) Internationale Veröffentlichungsnummer: WO9635733

(56) Entgegenhaltungen:
- EP-A- 0 593 975
- FR-A- 2 098 344
- FR-A- 2 103 036
- GB-A- 1 524 821

## Beschreibung

Die Erfindung betrifft die Verwendung von wäßrigen Dispersionen von ausgewählten, Harnstoffgruppen aufweisenden Polyurethanen zur Herstellung von biologisch abbaubaren und kompostierbaren Formkörpern einschließlich Flächengebilden, gegebenenfalls über die Zwischenstufe von aus den Dispersionen durch Sprühtrocknung hergestellten Granulaten.

Vollständig biologisch abbaubare und kompostierbare Kunststoffe (BAW) gewinnen wirtschaftlich und technisch in Zukunft mehr und mehr an Bedeutung (T. Jopski, Kunststoffe 83 (1993) 10). Die große Herausforderung liegt darin, Kunststoffe herzustellen, die über die notwendige Funktionalität verfügen, sich aber unter Stimulierung einer biologisch aktiven Umgebung abbauen. Auslöser kann ein mikrobiologischer, hydrolytischer oder oxidativer Abbau an einer speziellen Stelle in der Hauptkette des Polymeren sein. Alle Abbauprodukte müssen sicher, untoxisch und nicht in der Natur akkumulierbar sein, d.h. einem vollständigen mikrobiellen Endabbau unterliegen. Bisher sind drei generelle Kategorien von BAW bekannt geworden. Polyesterähnliche Polymere, Kunststoffe auf Basis von natürlichen Polymeren und andere abbaubare Kunststoffe z.B. Polyvinylalkohol. Zu den polyesterähnlichen Polymeren gehören Polymilchsäure, Polyhydroxybutyrat, -valeriat, Polycaprolacton sowie hochmolekulare aliphatische Polyester (EP-A-O 572 256, 1993). Um ausreichend hohe Molekulargewichte zu erreichen werden die in der EP-A-O 572 256 genannten Polyester mit organischen Diisocyanaten zum Endprodukt verlängert. Die Verwendung thermoplastischer Poly-(ester-urethane) als kompostierbare Kunststoffe ist in EP-A-O 593 975 beschrieben.

Biologisch abbaubare, thermoplastische Polyurethan-Filamente sind in DE-C-4 319 439 beschrieben. Die thermoplastisch verarbeitbaren Polyurethane sind linear und weisen demnach in der Polymerkette eingebaute difunktionelle Polyesterdiole und difunktionelle Polyethylenglykole auf und werden unter Mitverwendung von Hexamethylendiisocyanat und Butandiol oder Hexandiol als Kettenverlängerer aufgebaut (Beispiele 1 bis 3, DE-C-4 319 439).

Abbaubare Formkörper bzw. Flächengebilde aus Harnstoffgruppen aufweisenden Polyurethanen sind bisher nicht bekannt geworden. Mit der nachstehend näher beschriebenen erfindungsgemäßen Verwendung von wäßrigen Dispersionen von ausgewählten, Harnstoffgruppen aufweisenden Polyurethanen wird ein einfacher Weg zu solchen Kunststoffen gewiesen.

Gegenstand der Erfindung ist die Verwendung von wäßrigen Dispersionen von Harnstoffgruppen aufweisenden Polyurethanen, gegebenenfalls über die Zwischenstufe von durch Sprühtrocknung der Dispersionen erhaltenen Granulaten, zur Herstellung von vollständig biologisch abbaubaren Formkörpern einschließlich Flächengebilden, insbesondere Beschichtungen auf beliebigen Substraten, dadurch gekennzeichnet, daß man als in Wasser dispergierte, Harnstoffgruppen aufweisende Polyurethane nach bekannten Verfahren unter Einhaltung eines Äquivalentverhältnisses von Isocyanatgruppen zu gegenüber Isocyanatgruppen reaktionsfähigen Gruppen von 1:1 bis 2:1 hergestellte Umsetzungsprodukte aus
a) einer Diisocyanatkomponente, bestehend aus
   a1) Hexamethylendiisocyanat oder
   a2) Gemischen aus Hexamethylendiisocyanat mit insgesamt bis zu 60 Gew.-%, bezogen auf Gemisch, 1-Isocyanato-3,3,5-trimethyl-5-isocyanatomethyl-cyclohexan und/oder 4,4'-Diisocyanatodicyclohexylmethan und/oder 1-Methyl-2,4(6)-diisocyanatocyclohexan mit
b) einer Diolkomponente, bestehend aus
   b1) mindestens einem Polyesterdiol eines aus dem Hydroxylgruppengehalt berechenbaren Molekulargewicht von 500 bis 10 000 aus (i) Adipinsäure und/oder Bernsteinsäure und (ii) mindestens einem Alkandiol mit 2 bis 6 Kohlenstoffatomen oder
   b2) einem Gemisch derartiger Polyesterdiole mit bis zu 32 Gew.-%, bezogen auf das Gesamtgewicht der Komponente b), an gegebenenfalls Ethergruppen aufweisenden Alkandiolen mit 2 bis 6 Kohlenstoffatomen,
c) einer Diaminkomponente in einer Menge von 2 bis 50 Äquivalent-%, bezogen auf die Gesamtmenge der in den Komponenten b) und c) vorliegenden, gegenüber Isocyanatgruppen reaktionsfähigen Gruppen, bestehend aus
   c1) Diaminosulfonaten der allgemeinen Formel

      H₂N-(-CH₂-)ₙ-NH-(-CH₂-)ₘ-SO₃Me

      oder
   c2) Gemischen aus Diaminosulfonaten c1) mit bis zu 70 Gew.-%, bezogen auf das Gesamtgewicht der Komponente c), an Ethylendiamin, gegebenenfalls
d) hydrophilen Polyetheralkoholen der allgemeinen Formel

   H-X-O-R

   in einer Menge von bis zu 10 Gew.-%, bezogen auf das Gesamtgewicht der Komponenten b), c) und d), sowie gegebenenfalls
e) Wasser, welches nicht in die Berechnung des Äquivalentverhältnisses von Isocyanatgruppen zu gegenüber Isocyanatgruppen reaktionsfähigen Gruppen eingeht,
verwendet, wobei in den genannten allgemeinen Formeln
- m und n: unabhängig voneinander für Zahlen von 2 bis 6 stehen,
- Me: für Kalium oder Natrium steht,
- R: für einen einwertigen Kohlenwasserstoffrest mit 1 bis 12 Kohlenstoffatomen steht, und
- x: eine Polyalkylenoxid-Kette des Molekulargewichtsbereichs 88 bis 4000 bedeutet, deren Alkylenoxideinheiten zumindest zu 40 % aus Ethylenoxideinheiten und zum Rest aus Propylenoxideinheiten bestehen.

Wäßrige Dispersionen von Harnstoffgruppen aufweisenden Polyurethanen einer den erfindungsgemäßen Polyurethanen ähnlichen oder vergleichbaren Konstitution sind aus DE-OS 2 035 732 bzw. DE-OS 2 651 506 bereits bekannt. In diesen Vorveröffentlichen fehlt jedoch jeglicher Hinweis auf die Möglichkeit der Herstellung von biologisch abbaubaren und kompostierbaren Formkörpern bzw. bezüglich der zu treffenden Auswahl der zur Herstellung der Polyurethane einzusetzenden Ausgangsmaterialien, um den angestrebten Effekt der biologischen Abbaubarkeit und Kompostierbarkeit zu erreichen.

Der im Rahmen der Erfindung benutzte Begriff "Formkörper" soll auch Flächengebilde wie insbesondere Lacküberzüge oder Klebstoffschichten umfassen.

Die erfindungsgemäß zugänglichen Formkörper sind vollständig biologisch abbaubar. Dies bedeutet im Rahmen der Erfindung, daß Testfilme der Dicke 0,05 bis 0,5 mm, die beispielsweise durch Auftrocknen einer erfindungsgemäß zu verwendenden Dispersion auf einer Unterlage oder durch thermoplastische Formgebung von aus erfindungsgemäßen Formkörpern hergestellten Granulaten hergestellt worden sind, den nachstehend beschriebenen Folienkompostiertest mindestens ebensogut wie eine entsprechende Cellulose-Folie bestehen. Diese vollständige biologische Abbaubarkeit hat selbstverständlich auch eine einwandfreie Kompostierbarkeit der Formkörper zur Folge.

Der im Rahmen der Erfindung benutzte Begriff "wäßrige Dispersion" soll auch wäßrige Lösungen umfassen, die dann vorliegen können, wenn die Konzentration an hydrophilen Zentren in den Harnstoffgruppen aufweisenden Polyurethanen ausreichend hoch ist, um eine Wasserlöslichkeit zu gewährleisten. Oftmals handelt es sich bei den erfindungsgemäß zu verwendenden Dispersionen um wäßrige Systeme, die sowohl dispergierte als auch gelöste Harnstoffgruppen aufweisende Polyurethane enthalten.

Zur Herstellung der wäßrigen Dispersionen werden die bereits obengenannten Ausgangsmaterialien a), b), c) und gegebenenfalls d) und/oder gegebenenfalls e) in den genannten Mengenverhältnissen eingesetzt.

Die Diisocyanatkomponente a) besteht vorzugsweise ausschließlich aus Hexamethylendiisocyanat.

Die Diolkomponente b) besteht entweder aus bl) mindestens einem Polyesterdiol oder b2) aus einem Gemisch aus mindestens einem Polyesterdiol bl) mit bis zu 32, vorzugsweise bis zu 10 Gew.-% mindestens eines, gegebenenfalls Ethergruppen aufweisenden Alkandiols mit 2 bis 6 Kohlenstoffatomen.

Geeignete Polyesterdiole bl) sind solche eines aus dem Hydroxylgruppengehalt errechenbaren Molekulargewichts 500 bis 10 000, vorzugsweise 1 000 bis 2 500 auf Basis von (i) Adipinsäure und/oder Bernsteinsäure und (ii) gegebenenfalls Ethergruppen aufweisenden Alkandiolen mit 2 bis 6 Kohlenstoffatomen wie z.B. Ethylenglykol, Diethylenglykol, 1,4-Butandiol, Neopentylglykol und/oder 1,6-Hexandiol. Polyesterdiole, bei deren Herstellung ausschließlich Ethylenglykol und/oder 1,4-Butandiol als Diol eingesetzt worden sind, sind besonders bevorzugt.

Bei den gegebenenfalls als Hydroxylgruppen aufweisenden Kettenverlängerungsmitteln mitzuverwendenden, gegebenenfalls Ethergruppen aufweisenden Alkandiolen mit 2 bis 6 Kohlenstoffatomen handelt es sich um solche der soeben beispielhaft genannten Art.

Die Diaminkomponente c) besteht entweder aus cl) aus Diaminosulfonaten der bereits obengenannten allgemeinen Formel oder aus c2) Gemischen derartiger Diaminosulfonate mit Ethylendiamin, welches, falls überhaupt, in Mengen von bis zu 90, vorzugsweise bis zu 70 Äquivalent-%, bezogen auf die gegenüber Isocyanatgruppen reaktionsfähigen Aminogruppen der Komponente c) zum Einsatz gelangt. Ganz besonders bevorzugte Diaminosulfonate sind die Kalium- oder Natriumsalze der N-(2-Aminoethyl)-2-aminoethansulfonsäure.

Die Diaminkomponente c) wird im allgemeinen in einer Menge von 1 bis 10, vorzugsweise 2 bis 5 Gew.-%, bezogen auf das Gewicht der Komponente b) mitverwendet.

Bei der gegebenenfalls mitzuverwendenden Aufbaukomponente d) handelt es sich um hydrophile, einwertige Polyetheralkohole der allgemeinen Formel

H-X-O-R

in welcher
- R und X: die bereits obengenannte Bedeutung haben.

Bevorzugt sind solche derartige Polyetheralkohole, für welche
- R: für einen aliphatischen Kohlenwasserstoffrest mit 1 bis 4 Kohlenstoffatomen steht und
- X: für eine Polyalkylenoxidkette des Molekulargewichtsbereichs 500 bis 4 000 steht, in welcher mindestens 40, insbesondere mindestens 70 und besonders bevorzugt 100 % der vorliegenden Alkylenoxideinheiten, Ethylenoxideinheiten und die restlichen Alkylenoxideinheiten Propylenoxideinheiten darstellen.

Die Herstellung derartiger einwertiger Polyetheralkohole geschieht durch an sich bekannte Alkoxylierung geeigneter Startermoleküle R-OH wie beispielsweise Methanol, n-Butanol, n-Hexanol oder n-Dodecanol unter bevorzugter Verwendung von Ethylenoxid und gegebenenfalls Propylenoxid, in, den oben gemachten Ausführungen entsprechenden Mengenverhältnissen der Alkylenoxide. Hierbei können die genannten Alkylenoxide als Gemisch und/oder nacheinander zum Einsatz gelangen.

Die einwertigen Polyetheralkohole d) werden beim erfindungsgemäßen Verfahren, falls überhaupt, in Mengen von bis zu 10, vorzugsweise bis zu 3 Gew.-%, bezogen auf das Gesamtgewicht der Komponenten b), c) und d) eingesetzt.

Als weitere, gegebenenfalls in Betracht kommende Aufbaukomponente bei der Herstellung der Harnstoffgruppen aufweisenden Polyurethane ist e) Wasser zu nennen, welches insbesondere dann als Reaktant in Betracht zu ziehen ist, wenn bei der Herstellung der Polyurethane die in letzter Stufe durchzuführende Kettenverlängerungsreaktion von vorab hergestellten NCO-Prepolymeren in wäßrigem Medium erfolgt, insbesondere dann, wenn die in dem Wasser gelösten Diamine c) in, bezogen auf die NCO-Gruppen der NCO-Prepolymeren in unteräquivalenten Mengen zum Einsatz gelangen.

Neben diesen Aufbaukomponenten kommen im Prinzip auch trifunktionelle Verbindungen in untergeordneten Mengen in Betracht wie beispielsweise Glycerin oder Trimethylolpropan, die entweder in geringen Mengen in die Polyester b1) eingebaut oder in freier Form als Teil der Komponente b2) zum Einsatz gelangen können. Die Mitverwendung von derartigen verzweigenden Molekülen muß in der Regel durch monofunktionelle Verbindungen ausgeglichen werden, so daß, rein rechnerisch, wieder lineare Polymere resultieren.

Die Herstellung der Harnstoffgruppen aufweisenden Polyurethane aus den beispielhaft genannten Aufbaukomponenten kann nach beliebigen Verfahren des Standes der Technik erfolgen. Vorzugsweise wird jedoch nach dem bekannten Prepolymerverfahren gearbeitet, und zwar dergestalt, daß man aus den Komponenten b) und gegebenenfalls d) sowie der Diisocyanatkomponente a) unter Einhaltung eines NCO/OH-Äquivalentverhältnisses von 1,5:1 bis 4:1, vorzugsweise 1,8:1 bis 2,5:1 ein NCO-Prepolymer bzw. -Semiprepolymer herstellt und dieses anschließend mit der Komponente c) unter Kettenverlängerung zur Reaktion bringt.

Dabei wird das Prepolymer bzw. Semiprepolymer im allgemeinen lösungsmittelfrei bei Temperaturen von 20 bis 150°C hergestellt und anschließend in einem geeigneten Lösungsmittel gelöst. Selbstverständlich kann die Bildung der Prepolymeren bzw. Semiprepolymeren auch direkt in einem Lösungsmittel erfolgen. Als Lösungsmittel kommen insbesondere gegenüber Isocyanatgruppen inerte, mit Wasser unbegrenzt mischbare Lösungsmittel in Betracht. Bevorzugt wird Aceton als Lösungsmittel verwendet.

Die so hergestellten Prepolymeren bzw. Semiprepolymeren werden in der zweiten Reaktionsstufe mit der Komponente c) unter Kettenverlängerung zur Reaktion gebracht. Hierbei liegt das Äquivalentverhältnis von Isocyanatgruppen der Prepolymeren bzw. Semiprepolymeren einerseits zu gegenüber Isocyanatgruppen reaktionsfähigen Aminogruppen der Komponente c) andererseits bei 1:1 bis 20:1, vorzugsweise 1,2:1 bis 4:1. Die Kettenverlängerungsreaktion kann in Lösung, vorzugsweise in acetonischer Lösung oder auch in wäßrigem Milieu dergestalt erfolgen, daß man die Lösung der Prepolymeren bzw. Semiprepolymeren in organischem Lösungsmittel mit einer Lösung der Komponente c) in Wasser unter intensivem Durchmischen vereinigt. Wie bereits angedeutet, erfolgt gegebenenfalls hierbei auch eine Kettenverlängerungsreaktion durch Reaktion der NCO-Gruppen der Prepolymeren bzw. Semiprepolymeren mit dem Wasser. Bei der genannten, bevorzugten 2-stufigen Herstellung der Harnstoffgruppen aufweisenden Polyurethane werden die Äquivalentverhältnisse zwischen Isocyanatgruppen und gegenüber Isocyanatgruppen reaktionsfähigen Gruppen der beiden Reaktionsstufen im Rahmen der gemachten Offenbarung so gewählt, daß das Gesamtverhältnis von Isocyanatgruppen zu gegenüber Isocyanatgruppen reaktionsfähigen Gruppen der Komponenten b) bis d) dem oben angegebenen Verhältnis von 1:1 bis 2:1 entspricht. Das Wasser geht auf keinen Fall in die Berechnung der genannten Äquivalentverhältnisse ein.

Die Kettenverlängerungsreaktion erfolgt im allgemeinen innerhalb des Temperaturbereichs von 20 bis 50°C.

Grundsätzlich möglich, aber keineswegs bevorzugt, kann die Kettenverlängerungsreaktion auch in der Schmelze, d.h. in Abwesenheit von Lösungsmitteln und von Wasser erfolgen (Schmelzdispergierverfahren).

Zur Herstellung der erfindungsgemäß zu verwendenden Dispersionen werden die kettenverlängerten Polyurethane bzw. ihre Lösungen in organischen Lösungsmitteln, falls die Kettenverlängerungsreaktion in Abwesenheit von Wasser durchgeführt worden war, mit dem Dispergierwasser vermischt, worauf sich gegebenenfalls die destillative Entfernung zumindest eines Teils des gegebenenfalls mitverwendeten Hilfslösungsmittels anschließt. Falls die Kettenverlängerungsreaktion in wäßrigem Milieu erfolgte, kann zur Herstellung der wäßrigen Dispersionen gegebenenfalls weiteres Wasser zugegeben werden. Auch in diesem Fall kann selbstverständlich das verwendete Hilfslösungsmittel gewünschtenfalls destillativ entfernt werden.

Im allgemeinen wird die Gesamtmenge des zum Einsatz gelangenden Wassers so bemessen, daß 25 bis 50 gew.-%ige Dispersionen, bezogen auf die dispergierten Feststoffe einerseits und die kontinuierliche Phase andererseits vorliegen.

Die erfindungsgemäß zu verwendenden Dispersionen können zur Herstellung von vollständig biologisch abbaubaren und kompostierbaren Formkörpern verwendet werden. Diese Verwendung kann entweder durch direkte Anwendung der Dispersionen oder über die Zwischenstufe von vorab durch Sprühtrocknung aus den Dispersionen hergestellten Granulaten erfolgen.

Bezüglich der direkten erfindungsgemäßen Verwendung der Dispersionen seien beispielsweise die Verwendung als Lack zur Beschichtung beliebiger Substrate, als Klebstoff und/oder als Bindemittel für Cellulose und wasserlösliche oder - quellbare Stärke, zur Herstellung von Fliesen aus Baumwolle und/oder Hanf oder Lein, als polymeres Bindemittel für Holz, Holzstaub, oder Holzspäne, als Folien in Verbundwerkstoffen zur Herstellung von biologisch abbaubaren Verpackungen, zur Herstellung von Hygieneartikeln wie z.B. Babywindeln, als Saatgutbeizen zum Fixieren von Wirkstoffen als slow release Formulierungen, als Bindemittel zur Herstellung von Pflanztöpfen, als Papierbeschichtungen und zur Masseleimung von Papier zur Herstellung von Wursthüllen und zur Herstellung von kosmetischen Kompositionen erwähnt.

Auf an sich bekannte Weise durch Sprühtrocknung der erfindungsgemäß zu verwendenden Dispersionen erhaltene Granulate, die im allgemeinen einen mittleren Teilchendurchmesser von 1 bis 3 mm aufweisen, stellen thermoplastisch verarbeitbare Kunststoffe dar, aus denen durch an sich bekannte thermoplastische Verarbeitung bei 120 bis 240°C vollständig biologisch abbaubare und kompostierbare Formkörper wie beispielsweise Flachflolien, Spritzgußartikel wie Blumentöpfe, Trinkgefäße, Eßschalen, Tiefziehartikel, Blisterverpackungen, Blasfolien oder Flaschen hergestellt werden können. Die so hergestellten Formkörper zeichnen sich im übrigen durch hervorragende mechanische Festigkeiten aus.

Weiterer Gegenstand der Erfindung sind also biologisch abbaubare Formkörper, Fasern, Folien und Beschichtungen aus oben beschriebenem Harnstoffgruppen aufweisendem Polyurethan.

Weiterer Gegenstand der Erfindung sind biologisch abbaubare Formkörper enthaltend
I. 50 bis 99 Gewichtsteile Cellulose (gegebenenfalls in Faserform, z.B. Baumwolle, Flachs, Hanf, Leinen, Ramie), wasserlöslische oder -quellbare Stärke, Holz (einschließlich Holzstaub und -späne), Papier (einschließlich Pappe), Torf und/oder Kompost und
II. 50 bis 1 Gewichtsteil(e) oben beschriebenes Harnstoffgruppen aufweisendes Polyurethan.

Die Komponente II kann in den Formkörpern als Bindemittel, Klebstoff oder Beschichtung fungieren.
In den nachfolgenden Beispielen beziehen sich alle Prozentangaben auf das Gewicht.

### Beispiele

### Testmethoden

**Biologische Abbaubarkeit:** Zur Bestimmung der biologischen Abbaubarkeit der in den nachstehenden Beispielen beschriebenen Polyurethane wurde wie folgt verfahren:

### Folienkompostiertest

Die zu testenden Folien wurden zunächst bei 80°C bis zur Gewichtskonstanz getrocknet und dann in 6x6 Diarahmen eingespannt. Kompost aus einer Kompostieranlage wurde 2 cm hoch in Plastikschalen gefüllt und die Folien darin eingelegt. Die gefüllten Kästen wurden in einem Brutschrank für jeweils 4 Wochen nacheinander bei 60, 50 und 37°C inkubiert. Wasserverluste wurden über den Gewichtsverlust bestimmt und ausgeglichen. Während der Inkubation wurde einmal pro Woche der pH-Wert des Komposts gemessen. Nach jeweils 4 Wochen wurde ein Ansatz abgebrochen, die Folien entnommen, gereinigt, bei 80°C bis zur Gewichtskonstanz getrocknet und fotografiert. Unmittelbar nach dem Trocknen wurde der Gewichtsverlust der Folie durch erneutes Wiegen bestimmt.

In der vergifteten Kontrolle wurde der Kompost bei 105°C getrocknet, das dabei verdampfte Wasser wurde dann durch ein 1 %ige HgCl₂-Lösung ersetzt. Die Folien für die vergiftete Kontrolle wurden vorm Einbringen in das Kompostgemisch in die HgCl₂-Lösung eingelegt, getrocknet und dann in den vergifteten Kompost eingebracht. Der Kontrollansatz wurde genauso inkubiert wie die anderen Ansätze.

Ein Kunststoff wurde als abbaubar bezeichnet, wenn eine daraus hergestellte Folie in den mikrobicll aktiven Ansätzen ebenso wie die in einem Parallelversuch eingesetzte Cellulose-Folie völlig verschwand und in der vergifteten Kontrolle erhalten blieb.

### Headspace-Test

10 g durchgerotteter Kompost (bezogen aufs Trockengewicht) aus einer Kompostieranlage wurden mit 1 bis 2 g Polymer sehr gründlich vermischt. Anschließend wurde das Polymer/Kompost-Gemisch befeuchtet und wiederum gründlich vermischt. Der endgültige Wassergehalt des Polymer/Kompost-Gemisches sollte ca. 45 bis 55 % betragen. Das Polymer/Kompost-Gemisch wurde in ein Gefäß mit einem Liter Volumen gefüllt, welches gasdicht zu verschließen war und aus dem über ein Septum eine Gasprobe zu entnehmen war. In Kontrollansätzen wurde die gleiche Menge Kompost ohne Polymer eingesetzt. Nach Einfüllen des Polymer/Kompost-Gemisches in die Flaschen wurden diese für 20 bis 30 Minuten mit reinem O₂ begast. Nach der Begasung wurde die Flasche gasdicht verschlossen und der beim Begasen eintretende Wasserverlust durch Einspritzen von H₂O dest. durch das Septum ausgeglichen. Zur Simulation von Rottebedingungen erfolgte die Inkubation der Flaschen bei 55°C.

In Abständen von ein bis zwei Wochen wurde das gebildete CO₂ mittels Gaschromatographie bestimmt; nach der Gasmessung wurde die Begasung erneut durchgeführt. Aus der gebildeten Menge an CO₂ und dem Kohlenstoffgehalt des Polymers kann der prozentuale Abbaugrad bestimmt werden.

Ein Kunststoff wurde in diesem Test als abbaubar bezeichnet, wenn sein Abbau hinsichtlich Geschwindigkeit und Umfang dem von Cellulose entsprach.

### Kontrollierter Kompostier-Test

Der kontrollierte Kompostier-Test wurde gemäß DIN Prüfraster Teil 4 durchgeführt (DIN FNK AA 103.3).

Bis zu 100 g fein gemahlenes Polymermaterial wurden mit 1 000 g Kompost (Rottegrad 4) aus einer Kompostieranlage vermischt. Das Gemisch wurde in Gefäße mit einem Volumen von 3 1 eingefüllt und über einen Gaseinlaß kontinuierlich mit Luft begast. Die Gefäße wurden auf 58°C temperiert. Im Gasauslaß wurde kontinuierlich über einen IR-Detektor die CO₂-Konzentration gemessen, daneben wurde die Fließgeschwindigkeit des Gases bestimmt. Aus beiden Werten konnte die Menge an gebildetem CO₂ errechnet werden. Durch Korrektur gegenüber einer Kontrolle ohne Polymer konnte der Abbaugrad bestimmt werden.

Ein Kunststoff wurde in diesem Test als abbaubar bezeichnet, wenn sein Abbau hinsichtlich Geschwindigkeit und Umfang dem von Cellulose entsprach.

### Beispiel 1

83,4 g eines Polyesters aus Adipinsäure, Ethandiol und 1,4-Butandiol im Gewichtsverhältnis Ethandiol : Butandiol = 1,4:1 des mittleren Molekulargewichts 2000 und 3 g eines einwertigen Polyetheralkohols des mittleren Molekulargewichts 2240, hergestellt durch Alkoxylierung von n-Butanol unter Verwendung eines Gemisch aus Propylenoxid und Ethylenoxid im Molverhältnis PO:EO = 1:7,1 werden zusammen 30 Minuten bei 120°C und Vakuum entgast. Unter Stickstoff werden dem Ansatz 0,1 g Benzoylchlorid und 13,7 g Hexamethylendiisocyanat in einem Guß zugeführt. Nach 1 Std. Rühren bei 120°C beträgt der NCO-Gehalt 2,84 %. Das Prepolymer wird bei 50°C in 300 g Aceton gelöst und bei Raumtemperatur eine Mischung aus 4,8 g einer 50 %igen, wäßrigen Lösung des Natriumsalzes der N-(2-Aminoethyl)-2-aminoethansulfonsäure (AAS-Salz) und 1,15 g Ethylendiamin und 20 g Wasser zugegeben. Nach 15 Minuten wird mit 230 g Wasser versetzt und das Aceton bis 60°C und 140 mbar entfernt. Als Destillationsrückstand verbleiben 337 g einer dünnflüssigen, weißen Dispersion mit 30 Gew.-% Polyurethan-polyharnstoff.

Eine Probe der Dispersion wird auf einer Glasplatte getrocknet. Man erhält eine klare, klebfreie Folie mit einer Reißdehnung von mehr als 300 %. Die Schichtdicke beträgt 0,25 mm.

Die Folie wurde im Folienkompostiertest innerhalb von 8 Wochen vollständig abgebaut. Im Head-Space-Test wurden nach 90 Tagen 85 % des eingesetzten Kohlenstoffs aus dem Prüfmaterial zu CO₂ umgesetzt.

### Beispiel 2

81,5 g des Polyesterdiols gemäß Beispiel 1 und 2,9 g des einwertigen Polyetheralkohols gemäß Beispiel 1 werden zusammen 30 Minuten bei 120°C im Vakuum entgast. Unter Stickstoff werden dem Ansatz 0,1 g Benzoylchlorid und in einem Guß das Gemisch aus 6,7 g Hexamethylendiisocyanat und 8,8 g Isophorondiisocyanat zugeführt. Nach 1 Stunde Rühren bei 100°C beträgt der NCO-Gehalt 3,05 %. Das Prepolymer wird bei 50°C in 300 g Aceton gelöst und bei Raumtemperatur unter schnellem Rühren eine Mischung aus 4,8 g einer 50 %igen, wäßrigen Lösung von AAS-Salz und 1,36 g Ethylendiamin und 20 g Wasser zugegeben. Nach 15 Minuten versetzt man mit 230 g Wasser und entfernt das Aceton bis 50°C und 120 mbar. Als Destillationsrückstand verbleiben 362 g einer 29,6 %igen, dünnflüssigen, weißen Dispersion.

Eine Probe der Dispersion wird auf einer Glasplatte zu einer 0,25 mm dicken, klaren Folie getrocknet, deren Reißdehnung mehr als 300 % beträgt.

Im Folienkompostiertest erfolgte der Abbau innerhalb von 3 Monaten.

### Beispiel 3

170 g eines Polyesterdiols des Molekulargewichts 1700 aus Adipinsäure und einem Gemisch aus 1,6-Hexandiol und Neopentylglykol im Gewichtsverhältnis 1,9:1 werden 60 Minuten bei 120°C im Vakuum entgast. Unter Stickstoff werden dem Ansatz 0,2 ml Benzoylchlorid und in einem Guß 30,1 g Hexamethylendiisocyanat zugeführt. Nach 30 Minuten Rühren bei 120°C beträgt der NCO-Gehalt 3,2 %. Man löst das Prepolymer bei 50°C in 500 g Aceton, kühlt auf Raumtemperatur und gibt unter schnellem Rühren eine Mischung aus 9,7 g einer 50 %igen, wäßrigen Lösung von AAS-Salz und 1,51 g Ethylendiamin und 20 g Wasser zur acetonischen Lösung. Nach 15 Minuten Rühren wird mit 300 g Wasser versetzt und das Aceton bis 60°C und 140 mbar entfernt. Als Destillationsrückstand verbleiben 505 g. Nach dem Verdünnen mit 11 g Wasser erhält man eine 40 %ige, dünnflüssige, weiße Polyurethanharnstoffdispersion.

Eine Probe der Dispersion wird mit Wasser verdünnt, auf eine Glasplatte gegossen und getrocknet. Man erhält eine klare, klebfreie Folie mit einer Reißdehnung von mehr als 200 %. Die Schichtdicke beträgt 0,25 mm.

Im Folienkompostiertest erfolgte der Abbau innerhalb von 2 Monaten. Im kontrollierten Kompostier-Test gemäß DIN Prüfraster Teil 4 (DIN FNK AA 103.3) wurde innerhalb von 55 Tagen 90 % zu CO₂ umgesetzt. Im Headspace-Test wurden innerhalb von 87 Tagen 85 % zu CO₂ umgesetzt.

### Beispiel 4 (Vergleichsbeispiel)

200 g eines Polyesterdiols des Molekulargewichts 2000 aus Phthalsäure und Ethandiol werden 30 Minuten bei 120°C im Vakuum entgast. Unter Stickstoff werden dem Ansatz 0,3 ml Benzoylchlorid und in einem Guß 30,2 g Hexamethylendiisocyanat zugeführt. Nach 40 Minuten Rühren bei 120°C bis 140°C beträgt der NCO-Gehalt 2,65 %. Das Prepolymer wird bei 50°C in 500 g Aceton gelöst und bei Raumtemperatur unter schnellem Rühren eine Mischung aus 27,4 g einer 50 %igen, wäßrigen Lösung von AAS-Salz und 50 g Wasser zugegeben. Nach 10 Minuten Rühren wird mit 509 g Wasser versetzt und das Aceton bis 50°C und 140 mbar entfernt. Als Destillationsrückstand verbleiben 781 g. Nach Verdünnen mit 28 g Wasser erhält man eine 30 %ige, dünnflüssige, weiße Polyurethanharnstoffdispersion.

Eine Probe der Dispersion wird auf einer Glasplatte zu einer klaren, klebfreien Folie mit 0,25 mm Schichtdicke getrocknet.

Im Folienkompostiertest konnte kein Abbau festgestellt werden.

## Patentansprüche

1. Verwendung von wäßrigen Dispersionen von Harnstoffgruppen aufweisenden Polyurethanen, gegebenenfalls über die Zwischenstufe von durch Sprühtrocknung der Dispersionen erhaltenen Granulaten, zur Herstellung von vollständig biologisch abbaubaren Formkörpern einschließlich Flächengebilden, dadurch gekennzeichnet, daß man als in Wasser dispergierte, Harnstoffgruppen aufweisende Polyurethane nach bekannten Verfahren unter Einhaltung eines Äquivalentverhältnisses von Isocyanatgruppen zu gegenüber Isocyanatgruppen reaktionsfähigen Gruppen von 1:1 bis 2:1 hergestellte Umsetzungsprodukte aus
a) einer Diisocyanatkomponente, bestehend aus
a1) Hexamethylendiisocyanat oder
a2) Gemischen aus Hexamethylendiisocyanat mit insgesamt bis zu 60 Gew.-%, bezogen auf Gemisch, 1-Isocyanato-3,3,5-trimethyl-5-isocyanatomethyl-cyclohexan und/oder 4,4'-Diisocyanatodicyclohexylmethan und/oder 1-Methyl-2,4(6)-diisocyanatocyclohexan mit
b) einer Diolkomponente, bestehend aus
b1) mindestens einem Polyesterdiol eines aus dem Hydroxylgruppengehalt berechenbaren Molekulargewicht von 500 bis 10 000 aus (i) Adipinsäure und/oder Bernsteinsäure und (ii) mindestens einem Alkandiol mit 2 bis 6 Kohlenstoffatomen oder
b2) einem Gemisch derartiger Polyesterdiole mit bis zu 32 Gew.-%, bezogen auf das Gesamtgewicht der Komponente b), an gegebenenfalls Ethergruppen aufweisenden Alkandiolen mit 2 bis 6 Kohlenstoffatomen,
c) einer Diaminkomponente in einer Menge von 2 bis 50 Äquivalent-%, bezogen auf die Gesamtmenge der in den Komponenten b) und c) vorliegenden, gegenüber Isocyanatgruppen reaktionsfähigen Gruppen, bestehend aus
c1) Diaminosulfonaten der allgemeinen Formel
H₂N-(-CH₂-)ₙ-NH-(-CH₂-)ₘ-SO₃Me
oder
c2) Gemischen aus Diaminosulfonaten c1) mit bis zu 90 Gew.-%, bezogen auf das Gesamtgewicht der Komponente c), an Ethylendiamin, gegebenenfalls
d) hydrophilen Polyetheralkoholen der allgemeinen Formel
H-X-O-R
in einer Menge von bis zu 10 Gew.-%, bezogen auf das Gesamtgewicht der Komponenten b), c) und d) sowie gegebenenfalls
e) Wasser, welches nicht in die Berechnung des Äquivalentverhältnisses von Isocyanatgruppen zu gegenüber Isocyanatgruppen reaktionsfähigen Gruppen eingeht,
verwendet, wobei in den genannten allgemeinen Formeln
m und n unabhängig voneinander für Zahlen von 2 bis 6 stehen,
Me für Kalium oder Natrium steht,
R für einen einwertigen Kohlenwasserstoffrest mit 1 bis 12 Kohlenstoffatomen steht, und
X eine Polyalkylenoxid-Kette des Molekulargewichtsbereichs 88 bis 4000 bedeutet, deren Alkylenoxideinheiten zumindest zu 40 % aus Ethylenoxideinheiten und zum Rest aus Propylenoxideinheiten bestehen.

2. Verwendung gemäß Anspruch 1, dadurch gekennzeichnet, daß man als in Wasser dispergierte Polyurethane solche verwendet, die in zweistufiger Reaktion durch Umsetzung der Ausgangskomponenten a), b) und gegebenenfalls d) unter Einhaltung eines NCO/OH-Äquivalentverhältnisses von 1,5:1 bis 4:1 zu einem NCO-Prepolymeren und anschließende Kettenverlängerungsreaktion dieses NCO-Prepolymeren mit einer wäßrigen Lösung der Komponente c) hergestellt worden sind.

3. Verwendung gemäß Anspruch 1 und 2, dadurch gekennzeichnet, daß man solche in Wasser dispergierte, Harnstoffgruppen aufweisende Polyurethane verwendet, bei deren Herstellung
als Komponente a) ausschließlich Hexamethylendiisocyanat,
als Komponente b) ausschließlich Polyesterdiole auf Adipinsäure-Basis und
als Komponente c) ausschließlich c1) die Kalium- oder Natrium-Salze der N-(2-Aminoethyl)-2-aminoethansulfonsäure oder c2) Gemische derartiger Salze mit Ethylendiamin
verwendet worden sind.

4. Biologisch abbaubare Formkörper, Fasern, Folien und Beschichtungen aus in Anspruch 1 definiertem Harnstoffgruppen aufweisendem Polyurethan.

5. Biologisch abbaubare Formkörper enthaltend
I. 50 bis 99 Gewichtsteile Cellulose, wasserlösliche oder -quellbare Stärke, Holz, Papier, Torf und/oder Kompost und
II. 50 bis 1 Gewichtsteil(e) von in Anspruch 1 definiertem Harnstoffgruppen aufweisendem Polyurethan.

## Claims

1. Use of aqueous dispersions of polyurethanes which contain urea groups, optionally via the intermediate stage of granules obtained by spray drying the dispersions, for the production of fully biodegradable shaped bodies, including sheet structures, characterized in that, as polyurethanes which are dispersed in water and contain urea groups, use is made of reaction products which are prepared by known methods, observing a ratio of equivalents of isocyanate groups to isocyanate-reactive groups of from 1:1 to 2:1, from
a) a diisocyanate component consisting of
a1) hexamethylene diisocyanate or
a2) mixtures of hexamethylene diisocyanate with a total of up to 60 % by weight, based on the mixture, of 1-isocyanato-3,3,5-trimethyl-5-isocyanatomethyl-cyclohexane and/or 4,4'-diisocyanatodicyclohexylmethane and/or 1-methyl-2,4(6)-diisocyanatocyclohexane, with
b) a diol component consisting of
b1) at least one polyesterdiol with a molecular weight, which can be calculated from the hydroxyl content, of from 500 to 10,000 of (i) adipic acid and/or succinic acid and (ii) at least one alkanediol having 2 to 6 carbon atoms, or
b2) a mixture of such polyesterdiols with up to 32 % by weight, based on the total weight of component b), of alkanediols having 2 to 6 carbon atoms and optionally containing ether groups,
c) a diamine component in a quantity of from 2 to 50 equivalent-%, based on the total quantity of the isocyanate-reactive groups present in components b) and c), consisting of
c1) diaminosulphonates of the general formula
H₂N-(-CH₂-)ₙ-NH-(-CH₂-)ₘ-SO₃Me
or
c2) mixtures of diaminosulphonates c1) with up to 90 % by weight, based on the total weight of component c), of ethylenediamine, and optionally
d) hydrophilic polyether alcohols of the general formula
H-X-O-R
in a quantity of up to 10% by weight, based on the total weight of components b), c) and d), and also, optionally,
e) water, which is not included in the calculation of the ratio of equivalents of isocyanate groups to isocyanate-reactive groups,
where in the abovementioned general formulae
m and n independently of one another represent numbers from 2 to 6,
Me represents potassium or sodium,
R represents a monovalent hydrocarbon radical having 1 to 12 carbon atoms, and
X denotes a polyalkylene oxide chain with a molecular weight range from 88 to 4000, at least 40 % of whose alkylene oxide units consist of ethylene oxide units while the remainder consist of propylene oxide units.

2. Use according to Claim 1, characterized in that as water-dispersed polyurethanes use is made of polyurethanes which have been prepared in a two-stage reaction by reacting the starting components a), b) and, if appropriate, d), observing a ratio of NCO/OH equivalents of from 1.5:1 to 4:1, to give an NCO prepolymer and then subjecting this NCO prepolymer to a chain extension reaction with an aqueous solution of component c).

3. Use according to Claims 1 and 2, characterized in that use is made of water-dispersed polyurethanes, containing urea groups, which have been prepared using
as component a) exclusively hexamethylene diisocyanate,
as component b) exclusively polyesterdiols based on adipic acid, and
as component c) exclusively c1) the potassium or sodium salts of N-(2-aminoethyl)-2-aminoethanesulphonic acid or c2) mixtures of such salts with ethylenediamine.

4. Biodegradable shaped articles, fibres, films and coatings made from the polyurethane defined in Claim 1 and containing urea groups.

5. Biodegradable shaped bodies comprising
I. from 50 to 99 parts by weight of cellulose, water-soluble or water-swellable starch, wood, paper, peat and/or compost, and
II. from 50 to 1 part(s) by weight of the polyurethane which is defined in Claim 1 and contains urea groups.

## Revendications

1. Utilisation de dispersions aqueuses de polyuréthannes à groupes urée, le cas échéant en passant par l'intermédiaire de granules obtenus à partir des dispersions par séchage-atomisation, pour la fabrication d'objets moulés entièrement biodégradables, y compris des articles planiformes, caractérisée en ce que l'on utilise en tant que polyuréthannes à groupes urée, dispersés dans l'eau, des produits de réaction préparés par des modes opératoires connus, en maintenant un rapport de 1:1 à 2:1 entre les équivalents de groupes isocyanate et les équivalents de groupes réactifs avec les groupes isocyanate, de
a) un composant diisocyanate consistant en
a1) l'hexaméthylènediisocyanate ou
a2) des mélanges d'hexaméthylènediisocyanate avec une proportion totale allant jusqu'à 60 % en poids du mélange, de 1-isocyanato-3,3,5-triméthyl-5-isocyanatométhylcyclohexane et/ou de 4,4'-diisocyanatodicyclohexylméthane et/ou de 1-méthyl-2,4(6)-diisocyanatocyclohexane, avec
b) un composant diol consistant en
b1) au moins un polyester-diol de poids moléculaire, calculé à partir de la teneur en groupes hydroxy, 500 à 10 000, de (i) l'acide adipique et/ou l'acide succinique et (ii) au moins un alcanediol en C₂-C₆ ou bien
b2) un mélange de tcls polyester-diols avec une proportion allant jusqu'à 32 % du poids total du composant b), d'alcanediols en C2-C6 contenant le cas échéant des groupes éther,
c) un composant diamine en quantité de 2 à 50 équivalents %, par rapport à la quantité totale des groupes réactifs avec les groupes isocyanate présents dans les composants b) et c), consistant en
c1) des diaminosulfonates de formule générale
H₂N-(-CH₂-)ₙ-NH-(-CH₂-)ₘ-SO₃Me
ou bien
c2) des mélanges des diaminosulfonates c1) avec une proportion allant jusqu'à 90 % du poids total du composant c), d'éthylènediamine, le cas échéant
d) des polyéther-alcools hydrophiles de formule générale
H-X-O-R
en quantité allant jusqu'à 10 % du poids total des composants b), c) et d), et le cas échéant
e) de l'eau qui ne doit pas être comptée dans le calcul du rapport entre les équivalents de groupes isocyanate et les équivalents de groupes réactifs avec les groupes isocyanate,
les symboles des formules générales ci-dessus ayant les significations suivantes :
m et n sont des nombres allant chacun, indépendamment l'une de l'autre, de 2 à 6,
Me représente le potassium ou le sodium,
R représente un radical hydrocarboné monovalent en C₁-C₁₂ et
X représente une chaîne d'oxyde de polyalkylène de poids moléculaire 88 à 4 000 dont les motifs d'oxydes d'alkylène consistent pour au moins 40 % en motifs d'oxyde d'éthylène, le solde consistant en motifs d'oxyde de propylène.
d'oxyde de propylène.

2. Utilisation selon la revendication 1, caractérisée en ce que l'on utilise en tant que polyuréthannes dispersés dans l'eau des polyuréthannes qui ont été préparés dans une réaction à deux stades opératoires, par réaction des composants de départ a), b) et le cas échéant d), en respectant un rapport de 1,5:1 à 4:1 entre les équivalents de NCO et les équivalents d'OH, cette réaction donnant un prépolymère à groupes NCO qu'on soumet ensuite à une réaction d'allongement des chaînes à l'aide d'une solution aqueuse du composant c).

3. Utilisation selon les revendications 1 et 2, caractérisée en ce qu'on utilise en tant que polyuréthannes à groupes urée dispersés dans l'eau des produits pour lesquels, à la préparation,
on a utilisé en tant que composant a) exclusivement l'hexaméthylènediisocyanate,
en tant que composant b) exclusivement des polyester-diols à base de l'acide adipique et
en tant que composant c) exclusivement c1) les sels de potassium ou de sodium de l'acide N-(2-aminoéthyl)-2-aminoéthanesulfonique ou bien c2) des mélanges de ces sels et d'éthylènediamine.

4. Objets moulés, fibres, feuilles ct revêtements biodégradables consistant en polyuréthannes à groupes urée tels que définis dans la revendication 1.

5. Objets moulés biodégradables contenant
I. 50 à 99 parties en poids de cellulose, d'amidons solubles ou gonflables dans l'eau, de bois, de papier, de tourbe et/ou de compost et
II. 50 à 1 parties en poids d'un polyuréthanne à groupes urée tel que défini dans la revendication 1.
